Europäisches Patentamt

European Patent Office

Office européen des brevets

(19)

(11) EP 0 734 536 B1

(12)

# FASCICULE DE BREVET EUROPEEN

(45) Date de publication et mention
de la délivrance du brevet:
**21.07.1999 Bulletin 1999/29**

(21) Numéro de dépôt: **95935486.1**

(22) Date de dépôt: **13.10.1995**

(51) Int Cl.⁶: **G01V 1/36**

(86) Numéro de dépôt international:
**PCT/FR95/01345**

(87) Numéro de publication internationale:
**WO 96/12975 (02.05.1996 Gazette 1996/20)**

(54) **METHODE D'ANALYSE ET DE TRAITEMENT DE DONNEES SISMIQUES REFLEXION**

VERFAHREN ZUR ANALYSE UND VERARBEITUNG VON SEISMISCHEN REFLEKTIONSDATEN

METHOD FOR ANALYZING AND PROCESSING REFLECTION SEISMIC DATA

(84) Etats contractants désignés:
**FR GB IT NL**

(30) Priorité: **19.10.1994 FR 9412484**

(43) Date de publication de la demande:
**02.10.1996 Bulletin 1996/40**

(73) Titulaire: **ELF AQUITAINE PRODUCTION**
**92400 Courbevoie (FR)**

(72) Inventeurs:
• **DE BAZELAIRE, Eric**
**F-64230 Lescar (FR)**
• **DUNAND, Jean-Pierre**
**F-64420 Soumoulou (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
**GB-A- 2 251 689**

• **GEOPHYSICS, vol. 53, no. 2, Février 1988**
**TULSA, USA, pages 143-157, DE BAZELAIRE**
**'Normal moveout revisited: inhomogeneous**
**media and curved interfaces' cité dans la**
**demande**

EP 0 734 536 B1

**Description**

En exploration pétrolière, une méthode usuelle pour obtenir une image sismique du sous-sol est la sismique réflexion. Dans cette méthode, à partir de sources d'énergie appropriées, appelées émetteurs, on émet des ondes acoustiques, qui se propagent dans le sous-sol à explorer et se réfléchissent sur les différents réflecteurs qu'il renferme. Les ondes réfléchies sont enregistrées, en fonction du temps, sur des récepteurs adaptés, disposés à la surface du sol ou dans l'eau. Chaque enregistrement (ou trace) fourni par un récepteur est ensuite affecté à la position du point qui est situé au milieu du segment reliant l'émetteur au récepteur. Il s'agit du tri en point milieu commun.

Une technique de prospection sismique, devenue classique, est la couverture multiple. Dans une telle technique, les émetteurs et les récepteurs sont disposés à la surface du sol de telle sorte qu'un même point milieu regroupe plusieurs enregistrements. La série d'enregistrements associés au même point milieu forme ce qu'il est convenu d'appeler une collection d'enregistrements ou de traces en point milieu commun. L'ensemble des collections d'enregistrements est associé à une suite de points milieux différents situés, de préférence, le long d'une même ligne à la surface. Le traitement sismique permet, à partir de ces collections d'obtenir une image sismique dans le plan vertical passant par l'ensemble de ces points milieux. Le temps d'arrivée d'une onde enregistrée varie avec l'angle d'incidence θ, qui est l'angle entre la normale au réflecteur au point de réflexion, appelé point miroir, et la direction de l'onde incidente (descendante). Pour une même collection et un même point miroir, cet angle varie pour chaque enregistrement en fonction du déport x du récepteur par rapport au point milieu. Si l'on fait l'hypothèse classique d'un sous-sol homogène et isotrope, en couches planes et parallèles, les réflexions associées à chacun des réflecteurs du sous-sol, observées sur une collection d'enregistrements en point milieu commun s'alignent théoriquement le long d'hyperboles centrées à la verticale du point milieu et appelées indicatrices. De manière à réaliser la sommation des enregistrements de chaque collection, il est nécessaire d'appliquer une correction dépendant du temps, dite correction dynamique, qui a pour but de redresser les hyperboles pour les amener théoriquement à l'horizontale. Classiquement, la correction dynamique effectuée est une correction s'appuyant sur l'équation suivante

$$t^2 = t_o^2 + \frac{x^2}{V^2} \qquad (1)$$

dans laquelle :

x est le déport,

$t_o$ est le temps de propagation avec réflexion pour un déport x nul entre émetteur et récepteur,

V, qui est fonction du temps, désigne la vitesse moyenne de propagation des ondes dans le sous-sol et,

t est le temps de propagation après réflexion associé à un couple émetteur/récepteur pour le déport x.

Pour effectuer de manière satisfaisante les corrections dynamiques, il est nécessaire de connaître la loi des vitesses V(t) en chaque point milieu. A cet effet, des analyses de vitesse sont effectuées ponctuellement sur un nombre limité de collections de traces en point milieu commun. Les résultats font ensuite l'objet d'une double interpolation, en temps d'une part pour chacune des analyses, chaque analyse ne fournissant au maximum qu'une vingtaine de valeurs de la vitesse associée à une même verticale, et en abscisse, d'autre part, entre les analyses, ces dernières n'étant effectuées usuellement, que tous les 40 à 50 points milieux en moyenne, et ce en raison du fait que l'analyse est effectuée manuellement ce qui induit des temps d'analyse et des coûts de traitement relativement importants.

L'analyse de vitesse classique consiste à appliquer successivement aux collections de traces en point milieu commun, pour lcs points milieux sélectionnés, des vitesses constantes pour effectuer les corrections dynamiques correspondantes, puis à sommer les traces corrigées pour chacune des vitesses utilisées et à retenir manuellement celles des vitesses conduisant à un maximum d'énergie de la trace somme. La précision du champ de vitesses obtenu par un tel procédé est insuffisante pour un bon nombre de traitements plus sophistiqués appliqués sur les traces (enregistrements) avant sommation, par exemple migration, inversion, mesures d'effets des variations de l'amplitude avec le déport, (désigné par AVO pour Amplitude Variation Versus Offset), car ces traitements sont affectés par les effets des interpolations en temps et en abscisse, par l'imprécision sur les valeurs de vitesse retenues et par une déformation du signal dû à la formule de correction dynamique (1).

Dans un article intitulé "Normal moveout revisited : Inhomogeneous media and curved interfaces", publié dans la revue GEOPHYSICS, Volume 53, N° 2, Février 1988, pages 143 à 157, Eric de Bazelaire a développé une autre méthode d'analyse de vitesses, utilisée pour la réalisation de sections somme améliorées, appelées sections "Polystack". Cette analyse consiste à construire un document appelé "bap", que l'on associe à une collection en point milieu commun de traces sismiques enregistrées.

La "bap" associée à une collection de traces en point milieu commun est une autre collection de traces, dont chacune est le résultat de la sommation des traces de la collection point milieu après application à chacune de ces traces d'une correction de type statique (indépendante du temps) et différente d'une trace à l'autre. Ces corrections statiques, qui ont pour effet de décaler d'un même temps tous les échantillons d'une trace, sont représentatives de courbures prédéterminées. Lesdites corrections statiques sont définies par des hyperboles de correction répondant à la formule suivante

$$(t+t_p-t_o)^2 = t_p^2 + \frac{x^2}{V_1^2} \qquad (2)$$

où :

x est le déport,

$V_1$ est la vitesse de propagation des ondes dans la première couche du sous-sol exploré,

t et $t_o$ sont les temps de propagation avec réflexion entre émetteur et récepteur respectivement pour un déport x et pour un déport nul,

$t_p$, appelé temps de profondeur de mise au point, est la somme du temps $t_o$, (temps séparant l'origine des coordonnées de l'apex de l'hyperbole de correction) et du temps séparant l'origine des coordonnées du centre de l'hyperbole, dont l'asymptote est contrôlée par une vitesse unique. Dans la formule ci-dessus, le terme en $x^2$ pourrait être encore suivi d'au moins un terme d'ordre supérieur en $x^4$ qui est négligé.

De fait, les N traces d'une "bap" correspondent à une investigation selon N courbures différentes.

La "bap" associée à une collection de traces pour un point milieu commun donné explore tout le champ des courbures hyperboliques possibles pour ledit point milieu, des plus concaves vers le bas (vitesses faibles), correspondant à des $t_p$ positifs faibles, aux plus concaves vers le haut (vitesses imaginaires), correspondant à des $t_p$ négatifs, en passant par la vitesse infinie ($t_p = \infty$). Le domaine balayé étant très large, les "bap" comportent chacune un grand nombre de colonnes, généralement supérieur à 200.

Bien qu'elle permette d'obtenir un champ de vitesses précis et continu, la méthode Polystack présente cependant certains inconvénients. Tout d'abord, c'est une méthode onéreuse, car la durée du traitement est longue compte tenu de la taille des "bap" (nombre de colonnes supérieur à 200). Ensuite, il existe des risques d'instabilité dus aux erreurs de pointé automatique sur les "bap". Enfin, cette méthode n'élimine en rien les multiples non différenciés des réels.

La présente invention propose une méthode semi-automatique d'analyse et de traitement de données sismiques réflexion, qui permet de remédier aux insuffisances des méthodes antérieures précitées tout en conservant leurs avantages. En particulier, la méthode selon l'invention permet l'obtention, d'une part, d'un champ fin de vitesse, de meilleure résolution et, d'autre part, d'une section somme (stack) améliorée.

La présente invention a pour objet une méthode de traitement des enregistrements ou traces de sismique réflexion à déport variable, en vue de l'obtention d'un champ fin de vitesse et/ou de traces sismiques composites. A partir des collections de traces en point milieu commun cette méthode nécessite de soumettre les traces de chacune des collections à un traitement de correction dynamique, et elle se caractérise en ce que :

- on détermine pour l'ensemble des collections de traces corrigées dynamiquement les valeurs maximales des résidus positifs et négatifs de la correction dynamique par rapport à un temps $T_o$ correspondant au déport nul. On détermine ensuite une plage d'analyse temporelle située de part et d'autre dudit temps $T_o$ et dont la largeur est égale au minimum à la somme des valeurs absolues desdites valeurs maximales et au maximum à deux fois la valeur absolue du résidu maximum,

- on construit une famille de 2n + 1 hyperboles ou paraboles de correction résiduelle ayant chacune leur apex centré audit temps $T_o$ et présentant, à la valeur du déport maximum, une valeur de temps égale à l'une de 2n + 1 valeurs de temps équidistantes prédéterminées sur la plage d'analyse, et incluant la valeur $T_o$ et les valeurs extrêmes de ladite plage d'analyse,

- on détermine 2n + 1 jeux de correction statique définis, pour chacun des déports, par les écarts en temps présentés par rapport audit temps $T_o$ sur les 2n + 1 hyperboles ou paraboles de correction résiduelle,

- pour chaque collection de traces, on applique successivement à chacune des traces et pour chaque hyperbole ou parabole, la statique associée au déport de ladite trace, et

- on somme entre elles les traces ainsi corrigées statiquement, de façon à obtenir un ensemble de 2n + 1 traces somme caractérisant un champ de vitesse de correction.

D'autres caractéristiques et avantages apparaîtront à la lecture d'un mode de réalisation de la méthode selon l'invention ainsi que des dessins annexés sur lesquels :

- la figure 1 est une représentation très schématique d'un ensemble d'émetteurs et de récepteurs pour l'émission et la réception/enregistrement d'ondes se propageant dans une première couche du sous-sol à explorer,

- la figure 2 est une représentation schématique d'un ensemble de traces sismiques synthétiques en fonction du déport des récepteurs,

- la figure 3 représente une collection d'enregistrements réels,

- la figure 4 représente la collection de traces de la figure 3, corrigées dynamiquement,

- la figure 5 représente schématiquement un échantillon d'une famille d'hyperboles de correction résiduelle d'hyperbolicité,
- la figure 6 représente un domaine d'investigation dans une plage d'analyse,
- la figure 7 représente très schématiquement une BAP selon l'invention,
- la figure 8 représente très schématiquement et empiriquement une succession de maxima d'amplitude sélectionnés sur la BAP de la figure 7 selon l'axe des temps,
- les figures 9 et 10 représentent schématiquement respectivement les résultats d'une analyse de vitesse classique et selon l'invention,
- la figure 11 est une représentation schématique d'une trace somme composite obtenue à partir de la BAP de la figure 7.

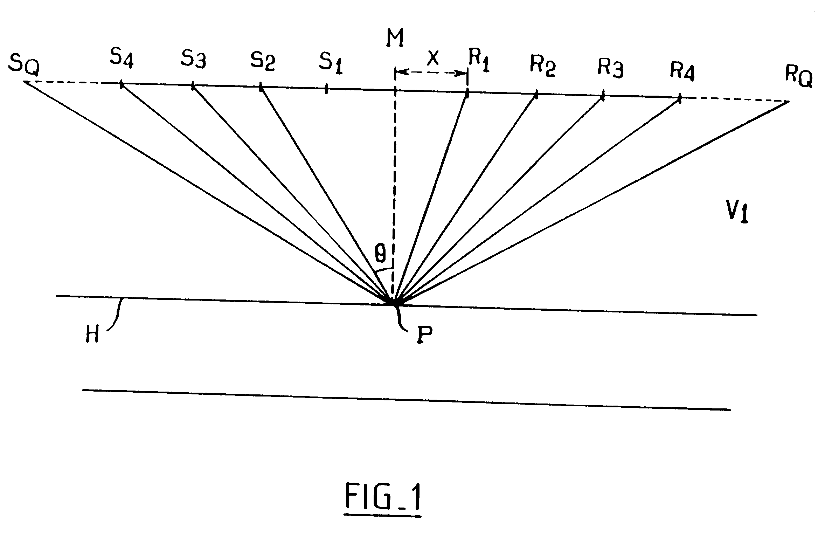

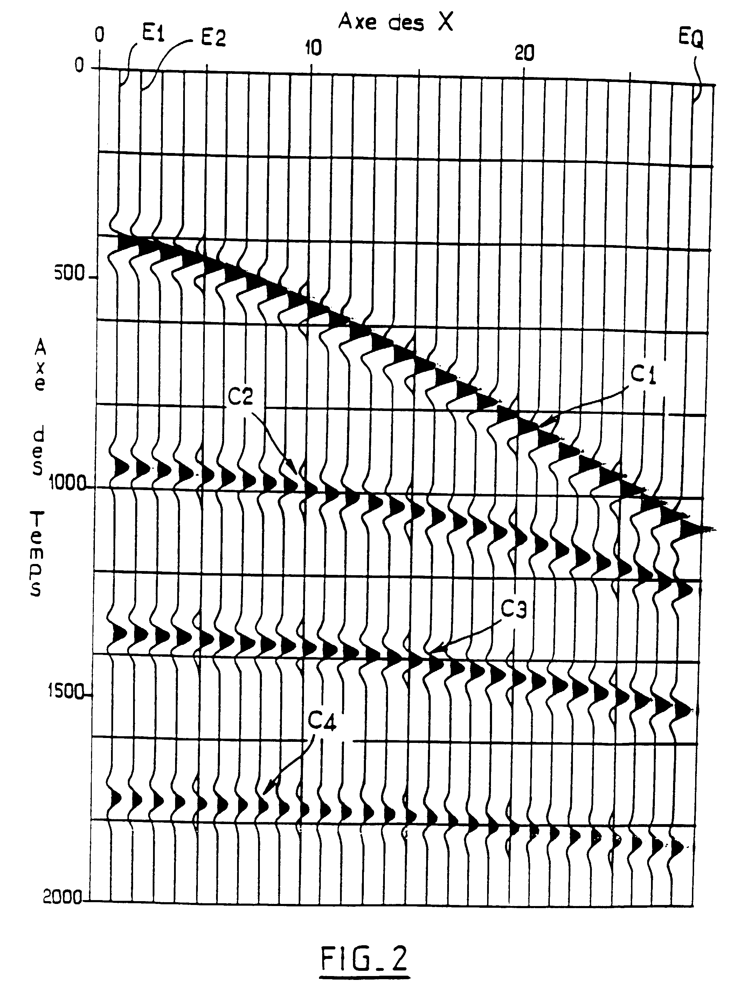

Dans le dispositif schématisé sur la figure 1, au couple émetteur $S_1$/récepteur $R_1$, est associé la trace sismique $E_1$ de la figure 2 de déport (offset) minimum. Au couple émetteur $S_2$/récepteur $R_2$ est associé la trace $E_2$ de déport supérieur et ainsi de suite jusqu'au couple émetteur $S_Q$/récepteur $R_Q$ associé à la trace $E_Q$ liée au déport maximum. Les réflexions associées à chaque limite de couches telle que H, du modèle géologique sont matérialisées sur chacun des enregistrements synthétiques de la figure 2 par une juxtaposition de réponses s'organisant le long d'indicatrices, dont seules quatre $C_1$ à $C_4$ sont représentées sur la figure 2. Les indicatrices $C_1$ à $C_4$ sont des branches d'hyperboles positives, dont les asymptotes sont centrées au centre de coordonnées. Dans le cas de la figure 2, l'équation des indicatrices caractérisant le temps de la propagation de l'onde émise en un point S et reçue en un point r après réflexion à la limite de couches (ou réflecteur) i est

$$T_i(x) = T_{io}^2 + \frac{X^2}{V_s^2}$$

où :

X est le déport,
$T_i$ et $T_{io}$ sont les temps d'arrivée de l'onde respectivement au récepteur au déport X et pour le déport nul (récepteur et émetteur placés en un même point en surface) et;
$V_S$ (Vitesse de sommation "stack") est la vitesse moyenne apparente de propagation dans le milieu traversé par l'onde au-dessus du réflecteur i.
$V_S$ s'exprime simplement en fonction des vitesses moyennes de propagation dans chacune des couches traversées par l'onde, uniquement dans le cas de couches planes et parallèles.

Les corrections dynamiques, qui sont appliquées avant toute sommation de l'information contenue sur les collections d'enregistrements associées à une même verticale, consistent à corriger lesdits enregistrements des effets d'obliquité des trajets de l'onde dans le sous-sol, tels que le trajet $S_2PR_2$ sur la figure 1, pour les ramener théoriquement à des trajets verticaux MPM. Ces corrections ont pour effet d'amener les indicatrices théoriquement à l'horizontale, position pour laquelle la sommation des traces corrigées est optimale pour l'information portée sur les indicatrices.

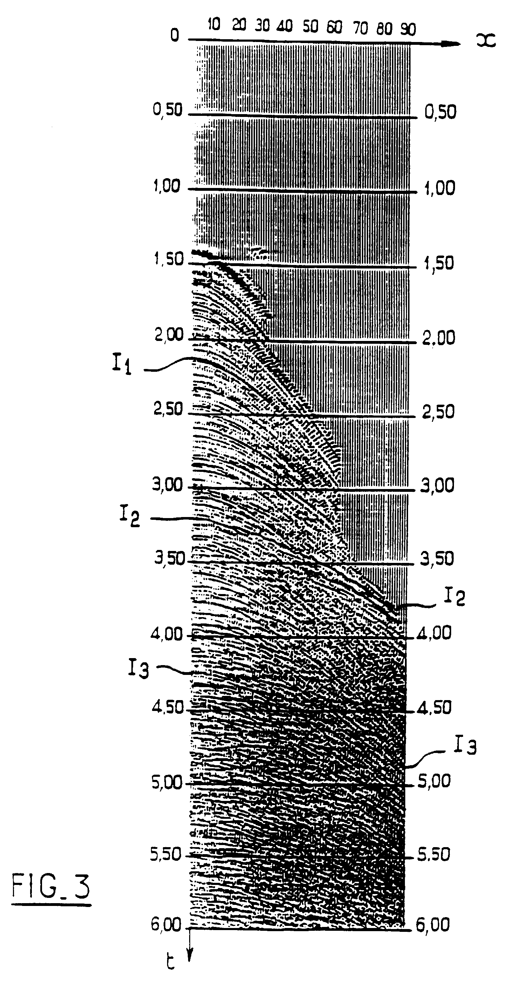

La reconnaissance directe de la forme des indicatrices n'étant pas aisée sur des collections d'enregistrements réels, telles que celle de la figure 3, on emploie pour cette reconnaissance la méthode indirecte suivante :

- on fait une hypothèse sur la forme des indicatrices des réflexions, telles que $I_1$, $I_2$, $I_3$,
- parmi les courbes qui répondent à cette hypothèse, on recherche celles qui optimisent la sommation des traces corrigées dynamiquement à partir de ces courbes.

En sismique classique, le seul paramètre que l'on fait varier dans l'équation de propagation (3) est la valeur de la vitesse moyenne apparente $V_S$. Un balayage de vitesses apparentes permet de définir une famille de courbes répondant à l'hypothèse de couches planes et parallèles. Le procédé d'analyse de vitesse classique, permet de sélectionner parmi ces courbes celles qui optimisent la sommation des traces. Les résultats de l'analyse de vitesse classique sont constitués par la donnée d'une dizaine ou davantage de couples vitesse-temps, les vitesses $V_S$ étant celles qui sont associées aux courbes optimisant la sommation des traces, et les temps $T_o$ correspondants. Les valeurs de vitesses $V_S$ sont ensuite interpolées linéairement en temps de façon à obtenir une fonction $V_S(t)$ associée au point milieu étudié. On effectue ensuite entre les résultats des différentes analyses de vitesse consécutives, une interpolation linéaire en abscisse x, le résultat final étant l'obtention d'un champ de vitesses V(x,t).

Dans le procédé selon l'invention, on applique dans un premier temps des corrections dynamiques en utilisant soit la vitesse $V_S$ obtenue comme indiqué précédemment, soit une vitesse $V'_S$ obtenue par un champ de vitesse V' (x,t) connu a priori. Pour cela, on affecte à l'amplitude de chaque échantillon de chacune des traces enregistrées de déport X, non plus son temps initial T mais le temps $T_o$ qui lui correspond, défini par la relation

$$T^2{}_o = T^2 - \frac{X^2}{V^2{}_s} \qquad (4)$$

$V_S$ étant V(X,T)
ou V'(X,T)
Dans le cas où les $T_o$ calculés ne sont pas des multiples du pas d'échantillonnage, on effectue une interpolation entre les valeurs successives calculées.

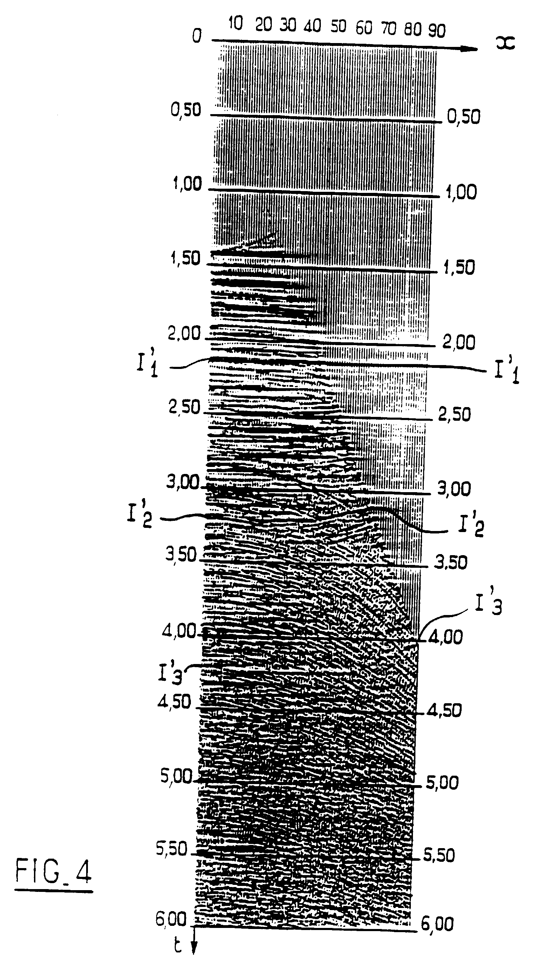

La validité de l'opération décrite ci-dessus est évidemment fonction de l'hypothèse faite au départ sur la structure du sous-sol. Le résultat de l'application de corrections dynamiques classiques sur l'exemple réel de la figure 3 met en évidence, sur la figure 4, l'existence de résidus de courbure, par exemple sur les indicatrices I'$_2$ et I'$_3$, qui sont d'autant plus importants que la géométrie réelle du sous-sol s'éloigne des hypothèses faites. Dans ce cas, les résultats d'analyses de vitesse seront erronés et la sommation effectuée de manière classique, à l'aide des résultats de ces seules analyses, sera dégradée.

L'invention se propose dans une deuxième phase de réduire ces résidus de courbure afin, d'une part, de déterminer un champ de vitesse fin, continu et de meilleure résolution ainsi qu'une sommation améliorée.

Il convient tout d'abord de définir les équations permettant de calculer les corrections résiduelles à appliquer aux indicatrices.

Le traitement optimal consiste à appliquer l'équation dite "avec retard" notée P SCAN, inspirée des lois de l'optique

$$(t+t_r)^2 = (t_o+t_r)^2 + \frac{x^2}{V1^2} \qquad (5)$$

où :

t$_o$ est le temps séparant le centre de coordonnées O de l'apex A de l'hyperbole,

t$_r$ désigne le temps séparant le centre des coordonnées O, au centre de symétrie de l'indicatrice point D pour l'hyperbole 51),

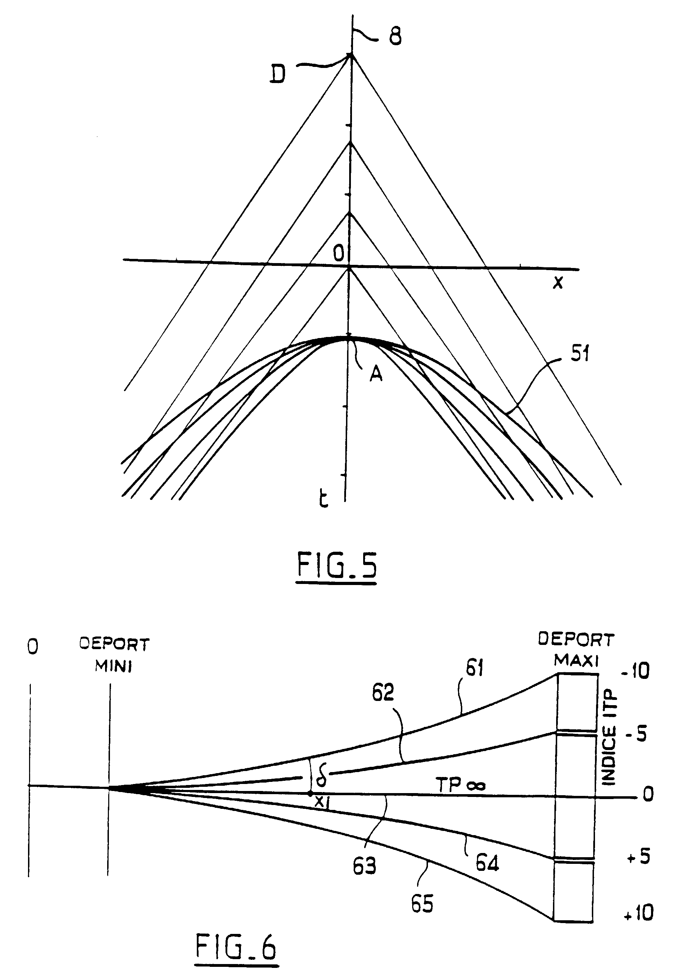

V$_1$ est la vitesse moyenne ou mieux la vitesse la plus faible du premier milieu traversé et,

x représente le déport (figure 5).

Cette équation définit une famille d'hyperboles mieux adaptée que la famille d'hyperboles définie par l'équation classique (1), aux milieux géologiques de géométrie quelconque présentant une symétrie cylindrique (ou perpendiculairement à l'axe du profil).

Une variation du paramètre t$_r$ se traduit, pour une courbure donnée des hyperboles, par une translation de l'hyperbole le long de l'axe des temps et correspond, en sismique, à l'application d'une statique. En effectuant le changement de variable t$_p$ = t$_o$+t$_r$ (où t$_p$ par analogie avec l'optique est assimilable à une profondeur de mise au point), l'équation précédente devient :

$$(t+t_p-t_o)^2 = t_p^2 + \frac{x^2}{V1^2} \qquad (6)$$

comme indiqué précédemment en (2) où 1\t$_p$-t$_o$ est la courbure de l'indicatrice.

La correction de courbure dynamique est complétée selon l'invention, par une correction statique qui décale d'un temps δt l'ensemble des échantillons constituant chacune des traces. Cette opération est très rapide sur un ordinateur vectoriel ou muni d'un processeur de matrices. Il devient ainsi possible de l'exécuter, non plus comme pour les analyses de vitesse dynamiques tous les m kilomètres mais avec un pointé manuel des vitesses et une double interpolation, ceci de manière automatique pour tous les échantillons de toutes les traces et pour un large éventail de courbures d'hyperboles. Ce procédé original n'implique pas d'étirement de traces en plus par rapport à la correction dynamique ; en outre il devient possible de rechercher des variations de vitesses aussi bien positives que négatives. Tous les événements, tels que réels, multiples, diffractions, etc., se présentent sous la forme d'hyperboles, reçoivent théoriquement un traitement égal, à condition d'être recherchés délibérément. Les multiples, se manifestant par des courbures bien différentes de celles des réflecteurs réels environnants, seront éliminés par le traitement selon l'invention, contrairement à ce qui se passe dans les procédés de l'art antérieur, pour peu que la plage d'analyse choisie soit suffisamment étroite.

Pour mettre en oeuvre la deuxième phase de traitement, il convient tout d'abord de définir la hauteur en temps (millisecondes) d'une plage d'analyse, qui sera utilisée sur l'ensemble des enregistrements traités. On détermine empiriquement la hauteur approchée de la plage d'analyse en doublant par exemple le résidu de courbure maximum par rapport à l'horizontale (correspondant à une courbure infinie) observable sur les collections corrigées dynamiquement. Au déport maximum Xmax sur la figure 4, par exemple, l'écart maximum est observé pour l'indicatrice I'$_3$ au déport maximum et a environ pour valeur ΔT=100ms. On fixe de manière avantageuse la hauteur de cette plage à 2ΔT soit 200ms.

Dans une étape suivante, on détermine le nombre 2n+1 d'hyperboles à sélectionner dans la plage d'analyse et, pour le déport Xmax, le pas en temps séparant les différentes hyperboles étudiées. Pour un échantillonnage correct de l'information la théorie des signaux définis un nombre 2n+1 suffisant d'hyperboles couvrant la plage d'analyse 2ΔT. De façon pratique, on effectue un échantillonnage en prenant

$$2n = \frac{2\Delta T}{\frac{K}{B}} \qquad (7)$$

ou

$$n = \Delta T \frac{B}{K}$$

où K est une constante égale au plus à $\sqrt{2}/2$ et B est la bande passante de la sismique traitée ; la valeur du rapport n est prise entière et par excès ; pour la figure 4 la valeur de B est égale à 50Hz, K est égal à 0,5 et 2n+1 est égal à 21 pour une plage d'analyse de 200ms.

Le pas entre hyperboles pour le déport Xmax est déterminé par $p = \Delta T/n$. Dans l'exemple précité, p est égal à 10ms. Les valeurs de $T_p$ associées aux 2n+1 hyperboles servant aux corrections statiques et à la constitution d'un document appelé BAP, selon l'invention, sont données par l'équation.

$$(T_p + \delta_{max})^2 = T_p{}^2 + \frac{x_{max}{}^2}{V_1{}^2} \qquad (8)$$

où $\delta_{max}$ prend successivement les 2n+1 valeurs multiples de p couvrant la plage d'analyse -np à +np, X et $V_1$ étant connus par ailleurs.

Un tel jeu d'hyperboles apparaît sur la figure 6. Chacune de ces hyperboles 61 à 65, servant à la correction des résidus de courbure sur la collection de traces déjà corrigée dynamiquement, est caractérisée par un indice, appelé indice ITP, variant de -n à +n, en liaison avec l'écart $\delta_{max}$ qui le caractérise au déport $X_{max}$ par rapport à l'axe horizontal défini par la valeur $T_p = \infty$. A titre d'exemple, on a représenté sur la figure 6 les hyperboles 61 à 65 caractérisées respectivement par les ITP -10, -5, 0, +5 et +10, l'hyperbole 61 présentant un écart maximum négatif de -100ms pour le déport $X_{max}$ et l'hyperbole 65 présentant un écart maximum positif de +100ms pour le même déport $X_{max}$ par rapport à la valeur prise pour le déport nul. Ces écarts maxima constituent les bornes de la plage d'analyse. Une telle famille d'hyperboles présente comme caractéristiques que leurs asymptotes sont parallèles entre elles comme illustré sur la figure 5, l'apex A étant le même.

Dans une étape suivante, on calcule, à partir des 2n+1 équations des hyperboles P SCAN déterminées à l'étape précédente, les 2n+1 jeux des statiques qui seront appliquées à chacune des traces de la collection. Un jeu de statiques pour une hyperbole, qui est caractérisée par son $T_p$, est constitué de l'ensemble des δ défini par l'équation

$$(T_p + \delta)^2 = T_p{}^2 + \frac{X^2}{V_1{}^2} \qquad (9)$$

X prenant les différentes valeurs successives des déports caractérisant chacune des traces. A titre d'exemple, on a indiqué sur la figure 6 la valeur de δ pour le déport xj et l'hyperbole 61 d'indice ITP= -10.

Pour chaque courbure caractérisée par son indice ITP (ou son $T_p$ correspondant), on applique aux échantillons de chacune des traces de déport xi, la statique δ(xi) associée définie par l'équation (9) pour le $T_p$ considéré.

On obtient ainsi une collection de traces corrigées statiquement, que l'on somme de façon à obtenir une trace somme primaire caractérisée par son indice ITP ou la valeur de $T_p$.

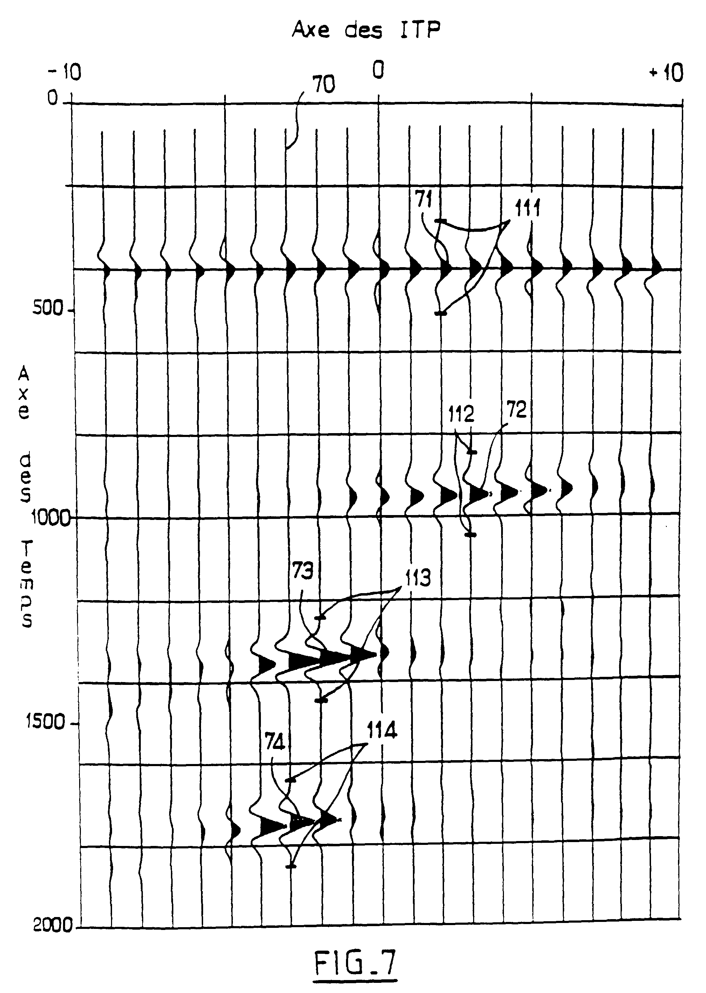

Cette opération est effectuée pour chaque ITP. On obtient ainsi une nouvelle collection de traces sommes ordonnées suivant les valeurs croissantes des ITP. Une telle collection est appelée BAP ou BAP DELTASTACK. Une BAP DELTASTACK est représentée schématiquement et à titre d'exemple sur la figure 7. Cette BAP comprend les 21 traces sommes primaires d'indice ITP 0, +1 à +10 et -1 à -10. Une telle BAP est construite pour chacune des collections de traces corrigées après que celles-ci aient été corrigées statiquement comme indiqué ci-dessus à partir des 2n+1 jeux de statiques calculés pour l'ensemble des données traitées. On observe sur les traces sommes primaires de chacune des BAP des pics d'amplitude. Par exemple, la trace somme primaire 70 d'indice ITP=-3 sur la figure 7, présente trois pics significatifs 71 à 73 situés approximativement à 400ms, 1350ms et 1750ms, respectivement.

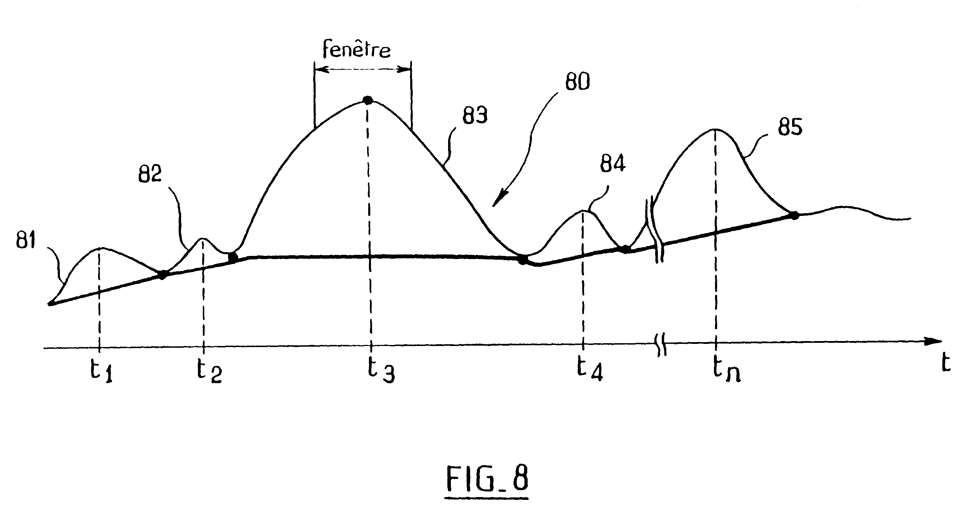

L'étape suivante du procédé selon l'invention consiste à pointer sur les BAP les maxima d'amplitude significatifs. Une manière de procéder pour cela consiste, par exemple, à élaborer dans un premier temps l'enveloppe d'amplitude pour chaque trace somme primaire de la BAP. On peut ensuite considérer la BAP comme une grille de valeurs d'amplitude indexées en temps et indices ITP et appliquer un opérateur à deux dimensions de recherche de maximum d'énergie. La recherche des maxima d'énergie sur la BAP consiste, en travaillant à une dimension, à élaborer une trace représentative de l'énergie maximum en fonction du temps, construite en gardant pour chaque temps, le maximum des 2n+1 valeurs d'amplitude sur les 2n+1 traces de la BAP au temps considéré. On conserve en mémoire dans l'ordinateur l'indice ITP de la trace somme de la BAP portant la valeur maximum. Une telle trace est représentée très schématiquement en fonction du temps sur la figure 8.

Cette trace 80 présente des maxima 81 à 85 que l'on pointe à l'aide d'une fenêtre que l'on fait glisser le long de l'axe des temps. Seuls les pics que l'on peut centrer sur ladite fenêtre, tels que les pics 81, 83 et 85 sur la trace 80, sont sélectionnés.

Quel que soit le mode de pointé choisi, dans le mode de réalisation préférentiel décrit, on fait en sorte qu'il n'y ait pas deux maxima sélectionnés associés à un même temps sur la BAP.

Dans le cas d'un pointé à l'aide d'un opérateur à deux dimensions, la condition précédente est satisfaite si la largeur de l'opérateur est égale, à la largeur de la BAP. Dans le type de pointé à une dimension (figure 8), cette condition est satisfaite de fait puisqu'on ne choisit par temps qu'un maximum. Avantageusement, la largeur de la fenêtre ou la hauteur de l'opérateur à deux dimensions est égale à 2/B.

La détermination des maxima des BAP et des paramètres (temps et Tp) associés à ces maxima constitue un premier résultat du procédé selon l'invention. Ces paramètres permettent, d'une part, la détermination d'un champ fin de vitesses de sommation en tout point milieu et, d'autre part, l'élaboration d'une section somme restituant mieux les signaux réfléchis qu'une section somme (stack) classique utilisant uniquement la phase de correction dynamique des collections de traces en point milieu commun.

On montre qu'en première approximation, la vitesse de correction globale $V_f$ peut être calculée à partir de la formule suivante :

$$V_f = V_S - V^3{}_S \times \frac{T_o}{2.V_1{}^2.T_p} \qquad (10)$$

dans laquelle

$V_S$ est la vitesse de correction dynamique initiale,
$V_1$ est la vitesse des ondes dans la première couche du milieu exploré
$T_o$ est le temps au départ nul,
$T_p$ est le temps de la profondeur de mise au point.

Tous les paramètres de l'équation (10) étant connus, il est possible de calculer pour chacun desdits maxima sélectionnés sur chacune des BAP la valeur $V_f$ à partir des $T_p$ correspondants. On associe à chaque valeur $V_f$ le temps $T_o$ qui lui correspond. Le nombre L de couples $(V_f, T_o)$ est variable d'une BAP à l'autre. L'ensemble des couples $(V_f, T_o)$, permet de déterminer, pour chaque point milieu, une nouvelle loi de vitesse.

De manière générale, le procédé selon l'invention permet d'obtenir par point milieu un nombre de valeurs 1 de vitesses $V_f$ très supérieur au nombre de valeurs obtenu par analyse de vitesse classique, usuellement compris entre 8 et 20.

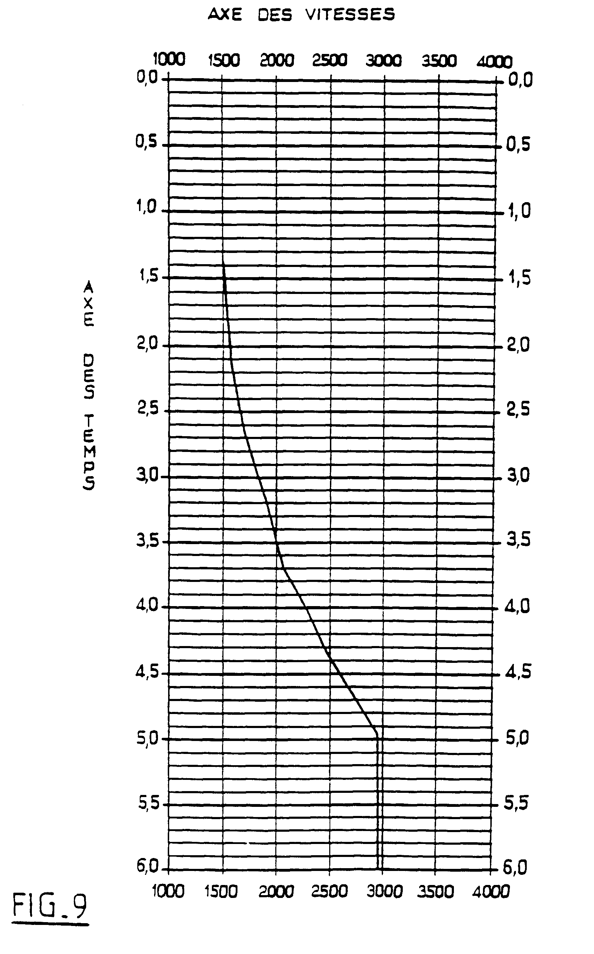

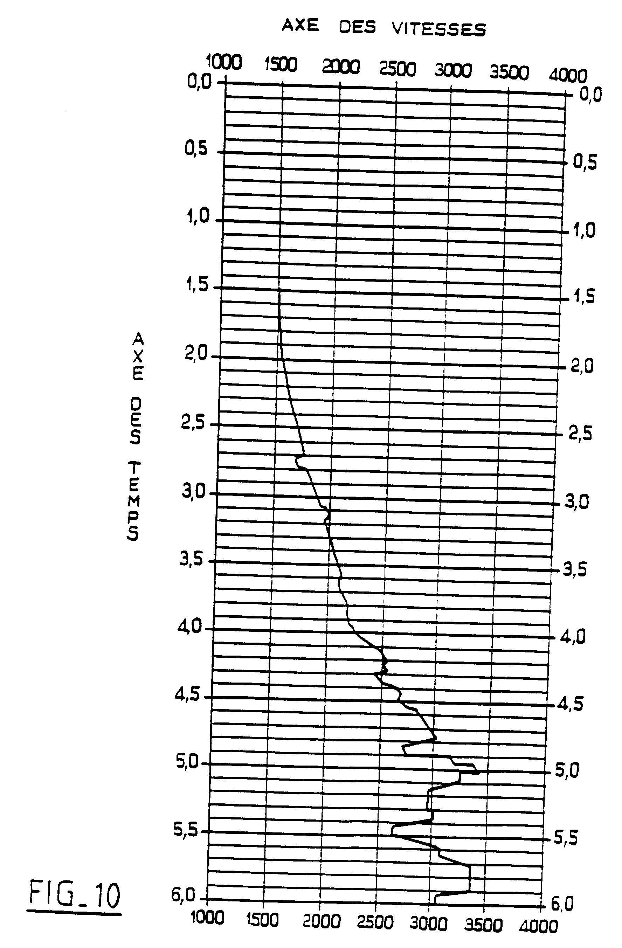

A titre d'illustration, on comparera sur les figures 9 et 10 les résultats d'une analyse de vitesse classique (figure 9) et d'une analyse de vitesse selon l'invention (figure 10), toutes deux obtenues à partir de la collection de traces de la figure 3.

Pour l'obtention d'un champ fin de vitesse V" (x, t), la connaissance de la loi de vitesse $V_f$ pour chaque point milieu permet de réduire l'opération de calcul du champ de vitesse à une simple interpolation en temps.

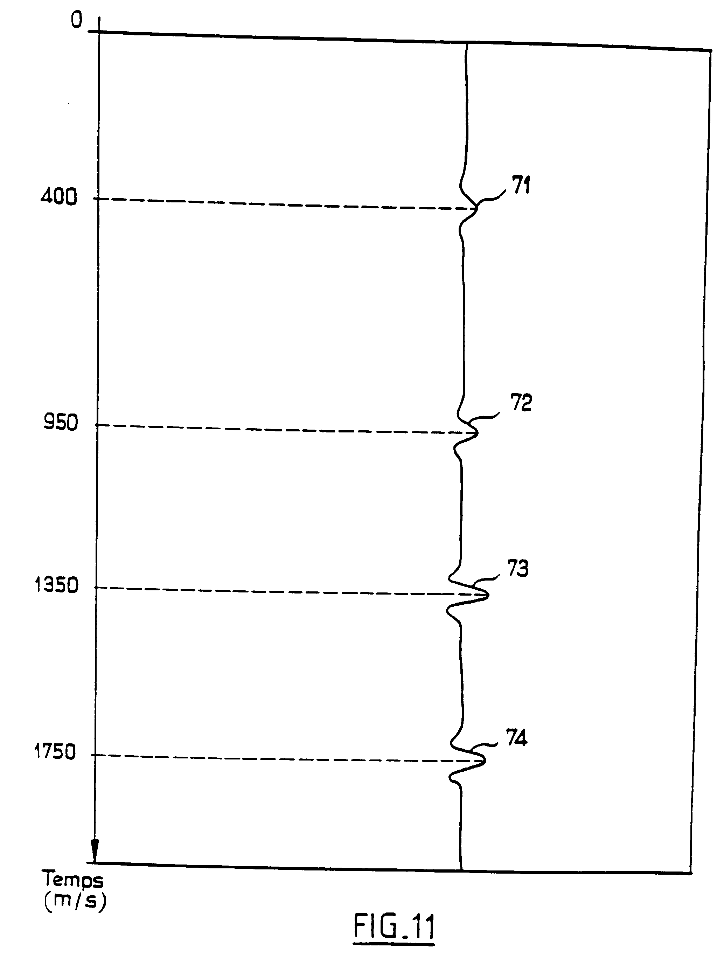

Le résultat du pointé des maxima 71 à 74 sur la BAP de la figure 7, permet également la construction d'une section temps dont chacune des traces, pour chaque point milieu du profil traité est constitué de la façon suivante : on sélectionne les portions 111 à 114 des traces somme primaires 70 centrées sur les maxima 71 à 74, de durée prédéterminée en temps (matérialisée sur la figure 7 par des petits tirets horizontaux), inférieure ou égale à la hauteur en temps de la fenêtre glissante utilisée pour le pointé des maxima de la figure 8. On génère une trace 110 composite (figure 11) associée au point milieu en accolant sur un même axe des temps les portions 111 à 114 ainsi sélectionnées, en conservant la position de ces portions dans le temps et en les reliant par des portions linéaires de l'espace BAP.

Suivant une autre variante, une partie du traitement consiste à appliquer successivement à chaque trace de chaque collection traitée dynamiquement, 2n+1 jeux de corrections statiques définis, pour le déport correspondant à la trace, par les écarts en temps présentés par rapport à $T_o$ sur les 2n+1 hyperboles de corrections statiques ; puis on regroupe les traces corrigées associées à chaque point milieu en 2n+1 groupes constitués, chacun, des traces ayant subi les corrections statiques correspondant à l'une des hyperboles de correction et à sommer les traces corrigées de chaque groupe pour obtenir un ensemble de 2n+1 traces sommes primaires correspondant aux 2n+1 hyperboles de corrections statiques, ledit ensemble constituant l'ensemble de traces sismiques caractérisant le champ fin de vitesse de corrections pour le point milieu considéré.

Dans ce qui précède on a fait référence à des familles d'hyperboles de correction répondant à la formule (2). Mais il est possible d'utiliser des familles de paraboles en lieu et place desdites familles d'hyperboles. En effet, lorsqu'on résoud l'équation définie par la formule (2), on aboutit à la formule suivante :

$$t - t_o = \frac{x^2}{t_p V_1{}^2} * \frac{1}{1 + \sqrt{1 + \frac{x^2}{t_p^2 V_1{}^2}}} \qquad (2')$$

Un développement en série de la formule (2') conduit à une nouvelle formule (2") du type :

$$t - t_o = \frac{x^2}{2V_1{}^2 \, t_p} - \frac{1}{8} * \frac{x^4}{V_1{}^4 \, t_p^3} + \ldots\ldots\ldots \qquad (2")$$

Lorsque x est petit par rapport à au moins $V_1$, on peut négliger les termes en $x^4$ et d'ordre supérieur ; dans ce cas la formule (2") est réduite à :

$$t - t_o = \frac{1}{2} * \frac{x^2}{2V_1{}^2 \, t_p} \qquad (2''')$$

qui est l'équation d'une parabole.

Les étapes du procédé selon l'invention peuvent être effectuées avec la famille de paraboles définie par la formule (2'"). C'est ainsi que sur la figure 6, les hyperboles 61 à 65 peuvent donc être remplacées par les paraboles correspondantes de correction des résidus de courbure sur la collection de traces corrigées de dynamique et procéder ensuite comme indiqué dans la description du mode de réalisation préféré de l'invention.

## Revendications

1. Méthode de traitement des enregistrements de traces de sismique réflexion à déport variable, en vue de l'obtention d'un ensemble de traces utilisables pour la détermination, notamment d'un champ fin de vitesse et/ou de traces sismiques composites, laquelle méthode est du type dans lequel, à partir desdites traces sismiques enregistrées, on constitue des collections de traces en point milieu commun et on soumet les traces de chacune des collections à un traitement de correction d'obliquité dynamique, et elle est caractérisée en ce qu'on :

   - détermine pour l'ensemble des collections de traces corrigées dynamiquement les valeurs maximales des résidus positifs et négatifs de la correction dynamique par rapport à un temps $T_o$ correspondant au déport nul, puis on détermine une plage d'analyse temporelle située de part et d'autre dudit temps $T_o$ et dont la largeur est égale au minimum à la somme des valeurs absolues desdites valeurs maximales et au maximum à deux fois la valeur absolue du résidu maximum,
   - on construit une famille de 2n+1 hyperboles ou paraboles de correction résiduelle ayant chacune leur apex centré audit temps $T_o$ et présentant, à la valeur du déport maximum, une valeur de temps égale à l'une de 2n+1 valeurs de temps équidistantes prédéterminées sur la plage d'analyse et incluant la valeur $T_o$ et les valeurs extrêmes de ladite plage d'analyse,
   - on détermine 2n+1 jeux de corrections statiques définis, pour chacun des déports, par les écarts en temps présentés par rapport audit temps $T_o$ sur les 2n+1 hyperboles ou paraboles de correction résiduelle,
   - pour chaque collection de traces, on applique successivement à chacune des traces et pour chaque hyperbole ou parabole, la statique associée au déport de ladite trace, et
   - on somme entre elles les traces ainsi corrigées statiquement, de façon à obtenir un ensemble de 2n+1 traces somme caractérisant un champ de vitesses de correction.

2. Méthode selon la revendication 1, caractérisée en ce que les corrections dynamiques réalisées sur les traces des collections en point milieu commun sont effectuées à partir des résultats d'analyses de vitesse conventionnelles en un nombre de points milieux prédéterminés.

3. Méthode selon la revendication 1, caractérisée en ce que les corrections dynamiques réalisées sur les traces des collections en point milieu commun sont effectuées à partir d'un champ de vitesse donné a priori.

4. Méthode selon l'une des revendications 1 à 3, caractérisée en ce que deux hyperboles ou paraboles consécutives quelconques de la famille des 2n+1 hyperboles ou paraboles de correction résiduelle sont séparées, à la valeur prédéterminée du déport maximum, par un écart constant en temps $\Delta t$ qui est égal à la valeur entière la plus proche par excès de la valeur du rapport K/B, où K est un coefficient au plus égal à $\sqrt{2}/2$ et B est la bande passante des enregistrements en point milieu commun.

5. Méthode selon l'une des revendications 1 à 4, caractérisée en ce que la famille d'hyperboles de correction statique est définie par l'équation :

$$(T\text{-}T_o + T_p)^2 = T_p{}^2 + \frac{X^2}{V_1{}^2}$$

dans laquelle X est le déport, T et $T_o$ désignent les temps de propagation avec réflexion entre émetteur et récepteur respectivement pour un déport X et pour un déport nul, la différence $(T\text{-}T_o)$ représentant la valeur de la correction statique fonction du déport X, $T_p$, appelé temps de profondeur de mise au point, est la somme du temps $T_o$ et du temps séparant l'origine des coordonnées du centre de l'hyperbole et $V_1$ désigne la vitesse de propagation des ondes émises dans la première couche du sous-sol exploré.

6. Méthode selon l'une des revendications 1 à 4, caractérisée en ce que la famille des paraboles de correction statique est définie, pour des valeurs de X faibles par rapport à $V_1$, par l'équation générale

$$T - T_o = \frac{1}{2} pX^2$$

dans laquelle :

   X est le déport,
   T et $T_o$ sont les temps de propagation avec réflexion entre émetteur et récepteur respectivement pour un déport X et pour un déport nul, la différence $(T - T_o)$ représentant la valeur de la correction statique fonction du déport X,
   $p = 1/T_pV_1{}^2$, $T_p$ étant la somme du temps $T_o$ et du temps séparant l'origine des coordonnées du centre de la parabole, et appelé temps de profondeur de mise au point,
   $V_1$ étant la vitesse de propagation des ondes émises dans la première couche du sous-sol exploré.

7. Méthode selon les revendications 5 ou 6, permettant la détermination semi-automatique d'un champ fin de vitesses de corrections, caractérisée en ce que l'on effectue un pointé des maxima sur chacun des ensembles de traces sismiques constitués des 2n+1 traces sommes primaires, en appliquant sur la totalité des traces de l'ensemble considéré une fenêtre glissante de hauteur en temps prédéterminée, de préférence égale à 2/B, et en ne retenant dans cette fenêtre que les maxima centrés, chaque maximum étant associé à une valeur de $T_o$ et de $T_p$, puis on calcule la vitesse $V_f$ correspondant au couple temps $(T_o, T_p)$ par la relation :

$$V_f = V_S - V_S{}^3 \cdot \frac{T_o}{2V_1{}^2 T_p}$$

où $V_S$ est la vitesse utilisée dans le traitement de corrections dynamiques.

8. Méthode selon l'une des revendications 1 à 7, permettant la détermination d'une section somme améliorée, caractérisée en ce que l'on effectue un pointé des maxima sur chacun des ensembles de traces sismiques constitués des 2n+1 traces sommes primaires, en appliquant sur la totalité des traces de l'ensemble considéré une fenêtre glissante de hauteur en temps prédéterminée, de préférence égale à 2/B, en ne retenant dans cette fenêtre que les maxima centrés, on sélectionne les portions de traces sommes primaires centrées sur ces maxima et de hauteur prédéterminée en temps, de préférence égale à la hauteur en temps de la fenêtre glissante utilisée pour le pointé des maxima, et on génère une trace somme composite associée au point milieu correspondant à l'ensemble des 2n+1 traces sommes primaires traitées en replaçant sur un même axe des temps les portions ainsi sélectionnées sur les 2n+1 traces sommes primaires en conservant la position de ces portions dans le temps.

**Claims**

1. A method of processing recording of variable-offset seismic reflection traces, in order to obtain a set of traces that can be used for the determination, in particular, of a high resolution spatial velocity field and/ or of composite seismic traces, wherein said method is of the type in which, using said recorded seismic traces, common midpoint gathers are constructed the traces of each of the gathers are subjected to a dynamic obliquity correction treatment, and the method is characterised in that :

   ~ for the set of normal moveout-corrected gathers of traces. the maximum values of the positive and negative residues of the normal moveout correction are determined relatively to a time $t_0$ corresponding to zero offset, then a time range analysis is determined located on either side of said time $t_0$ and of which the width is equal to at least the sum of the absolute values of said maximum values and at most twice the absolute value of the maximum residual,

   ~ a family of 2n + 1 residual correction hyperbolas or parabolas are constructed, each having its apex centred on said time $t_0$ and, at the value of the maximum offset, having a value of time that is equal to one of the 2n + 1 equidistant time values predetermined on the analysis range, and including the value $t_0$ and the extreme values of said analysis range,

   ~ 2n + 1 sets of static corrections are determined for each of the offsets, defined by the time differences presented relatively to said time $t_0$ on the 2n + 1 residual correction hyperbolas or parabolas,

   ~ for each gather of traces, and successively to each of the traces and for each hyperbola or parabola, the static correction associated with the offset trace is applied, and

   ~ the statically corrected traces are stacked together in order to obtain a set of 2n + 1 stacked traces characterising a correction velocity field.

2. The method according to Claim 1, characterised in that the normal moveout corrections applied to the traces of the common midpoint gathers are made from the results of conventional velocity analyses at a number of predetermined midpoints.

3. The method according to Claim 1, characterised in that the normal moveout corrections applied to the traces of the common midpoint gathers are made from a velocity field given *a priori.*

4. The method according to any of Claims 1 to 3, characterised in that any two consecutive hyperbolas or parabolas of the family of 2n+1 residual moveout correction hyperbolas or parabolas are separated, at the predetermined value of the maximum offset, by a constant time difference $\Delta t$ which is equal to the nearest integer from above to the value of the ratio K/B, where K is a coefficient equal at most to $\sqrt{2}/2$ and B is the passband of the common midpoint recordings.

5. The method according to any of Claims 1 to 4, characterised in that the family of static correction hyperbolas is defined by the equation :

$$(t - t_0 + t_p)^2 = t_p{}^2 + \frac{x^2}{V_1{}^2}$$

where x is the offset, t and $t_0$ denote the source/receiver reflection travel times respectively for offset x and for zero offset, the difference $(t - t_0)$ representing the value of the static correction which is a function of the offset $x, t_p$, called the time of focusing depth, is the sum of the time $t_0$ and the time separating the origin of the coordinates from the centre of the hyperbola, and $V_1$ denotes the propagation velocity of the waves transmitted in the first subsurface layer explored.

6. The method according to any of Claims 1 to 4, characterised in that the family of static correction parabolas is defined, for low values of x relatively to $V_1$, by the general equation:

$$t - t_0 = \frac{1}{2} px^2$$

where:

x is the offset,
t and $t_0$ are the source/receiver reflection travel times respectively for offset x and for zero offset, the difference $(t - t_0)$ representing the value of the static correction which is a function of the offset x,
$p = 1/t_p \, V_1^2$, where $t_p$ is the sum of the time $t_0$ and the time separating the origin of the coordinates from the centre of the parabola, and called the time of focusing depth,
$V_1$ is the propagation velocity of the waves transmitted in the first subsurface layer explored.

7. The method according to Claim 5 or Claim 6, permitting the semi-automatic determination of a high resolution spatial correction velocity field, characterised in that a plotting is made of the peaks on each of the sets of seismic traces consisting of the 2n + 1 primary stacked traces, by applying to all the traces of the set concerned, a sliding window with a predetermined time height, preferably equal to 2/B, and by selecting in this window only the centred peaks, each peak being associated with a value of $t_0$ and of $t_p$; and then calculating the velocity $V_f$ corresponding to the time pair $(t_0, t_p)$ by the equation :

$$V_f = V_S - V_S^3 * \frac{t_0}{2.V_1^2.t_p}$$

where $V_S$ is the velocity used in the normal moveout correction.

8. The method according to any of Claims 1 to 7, permitting the determination of an improved stacked section, characterised in that a plotting is made of the peaks on each of the sets of seismic traces consisting of the 2n + 1 primary stacked traces, by applying to all the traces of the set concerned a sliding window with a predetermined time height, preferably equal to 2/B, and by selecting in this window only the centred peaks, and selecting the portions of primary stacked traces centred on these peaks and of predetermined height in time, preferably equal to the height in time of the sliding window used for plotting the peaks, and by generating a composite stacked trace associated with the midpoint corresponding to the set of the 2n + 1 primary stacked traces processed, by replacing, on the same time axis, the portions thus selected on the 2n + 1 primary stacked traces and preserving the position of these portions in time.

**Patentansprüche**

1. Verfahren zur Verarbeitung der Aufzeichnungen von reflexionsseismischen Linien unter veränderlichem seitlichem Abstand zum Zweck der Herstellung einer Gruppe von Linien, die für die Bestimmung insbesondere eines endgültigen Profils von Geschwindigkeiten und/oder von zusammengesetzten seismischen Linien verwendbar sind, wobei man in diesem Verfahren ausgehend von diesen aufgezeichneten seismischen Linien Sammlungen von Linien mit gemeinsamem Mittelpunkt bildet und die Linien jeder der Sammlungen einer dynamischen Schrägheitskorrekturbehandlung unterzieht, dadurch gekennzeichnet,

- daß man für die Gesamtheit der Sammlungen von dynamisch korrigierten Linien die Höchstwerte der positiven und negativen Reste der dynamischen Korrektur bezüglich einer dem seitlichen Abstand Null entsprechenden Zeit $T_o$ bestimmt und dann einen zu beiden Seiten dieser Zeit $T_o$ gelegenen zeitlichen Analysebereich bestimmt, dessen Breite mindestens gleich der Summe der absoluten Werte dieser Höchstwerte und höchstens gleich dem Zweifachen des absoluten Werts des Höchstrestes ist,
- daß man eine Schar von 2n+1 Restkorrekturhyperbeln oder
- parabeln konstruiert, deren Apex jeweils auf die Zeit $T_o$ zentriert ist und die bei dem Wert des maximalen seitlichen Abstandes einen Zeitwert gleich einem von in gleichen Abständen zueinander liegenden, auf dem Analysebereich vorbestimmten, 2n+1 Zeitwerten haben, die den Wert $T_o$ und die Extremwerte dieses Analysebereichs einschließen.
- daß man 2n+1 statische Korrektursätze bestimmt, die für jeden der seitlichen Abstände durch die Zeitabweichungen definiert sind, die bezüglich dieser Zeit $T_o$ an den 2n+1 Restkorrekturhyperbeln oder -parabeln auftreten,

- daß man bei jeder Sammlung von Linien nacheinander an jeder der Linien und bei jeder Hyperbel oder Parabel die dem seitlichen Abstand dieser Linie zugeordnete Statik anwendet und
- daß man die auf diese Weise statisch korrigierten Linien summiert, so daß man eine Gruppe von 2n+1 Summenlinien erhält, die ein Korrekturgeschwindigkeitsprofil kennzeichnen.

2. Verfahren nach Anspruch 1, dadurch gekennzeichnet, daß die an den Linien der Sammlungen mit gemeinsamem Mittelpunkt vorgenommenen dynamischen Korrekturen ausgehend von den Ergebnissen von herkömmlichen Geschwindigkeitsanalysen an einer Anzahl von vorbestimmten Mittelpunkten durchgeführt werden.

3. Verfahren nach Anspruch 1, dadurch gekennzeichnet, daß die an den Linien der Sammlungen mit gemeinsamem Mittelpunkt vorgenommenen dynamischen Korrekturen ausgehend von einem von vornherein gegebenen Geschwindigkeitsprofil durchgeführt werden.

4. Verfahren nach einem der Ansprüche 1 bis 3, dadurch gekennzeichnet, daß zwei beliebige aufeinanderfolgende Hyperbeln oder Parabeln der Schar von 2n+1 Restkorrekturyperbeln oder -parabeln bei dem vorbestimmten Wert des maximalen seitlichen Abstandes durch eine konstante Zeitabweichung $\Delta t$ getrennt sind, die gleich dem nächsthöheren ganzzahligen Wert des Werts des Verhältnisses K/B ist, worin K ein Koeffizient ist, der höchstens gleich $\sqrt{2}/2$ ist, und B der Durchlaßbereich der Aufzeichungen mit gemeinsamem Mittelpunkt ist.

5. Verfahren nach einem der Ansprüche 1 bis 4, dadurch gekennzeichnet, daß die Hyperbelschar zur statischen Korrektur durch die Gleichung

$$(T-T_o + T_p)^2 = T_p^2 + \frac{x^2}{V_1^2}$$

definiert ist, in der X der seitliche Abstand ist, T und $T_o$ die Fortpflanzungszeiten mit Reflexion zwischen Sender und Empfänger bei einem seitlichen Abstand X bzw. bei einem seitlichen Abstand Null bezeichnen, die Differenz $(T-T_o)$ der Wert der statischen Korrektur in Abhängigkeit vom seitlichen Abstand X ist, $T_p$, bearbeitete Tiefenlaufzeit genannt, die Summe der Zeit $T_o$ und der Zeit zwischen dem Ursprung der Koordinaten und dem Mittelpunkt der Hyperbel ist und $V_1$ die Fortpflanzungsgeschwindigkeit der gesendeten Wellen in der ersten Schicht des untersuchten Untergrunds ist.

6. Verfahren nach einem der Ansprüche 1 bis 4, dadurch gekennzeichnet, daß die Parabelschar zur statischen Korrektur für Werte von X, die gegenüber $V_1$ klein sind, durch die allgemeine Gleichung

$$T - T_o = \frac{1}{2} pX^2$$

definiert ist, in der

- X der seitliche Abstand ist,
- T und $T_o$ die Fortpflanzungszeiten mit Reflexion zwischen Sender und Empfänger bei einem seitlichen Abstand X bzw. bei einem seitlichen Abstand Null sind, wobei die Differenz $(T-T_o)$ den Wert der statischen Korrektur in Abhängigkeit vom seitlichen Abstand X darstellt,
- $p = 1/T_p V_1^2$, wobei $T_p$ die Summe der Zeit $T_o$ und der Zeit zwischen dem Ursprung der Koordinaten und dem Mittelpunkt der Parabel ist und bearbeitete Tiefenlaufzeit genannt wird und
- $V_1$ die Fortpflanzungsgeschwindigkeit der gesendeten Wellen in der ersten Schicht des untersuchten Untergrunds ist.

7. Verfahren nach den Ansprüchen 5 oder 6, das die halbautomatische Bestimmung eines endgültigen Korrekturgeschwindigkeitsprofils gestattet, dadurch gekennzeichnet, daß man eine Anpeilung der Maxima auf jeder der aus den 2n+1 Primärsummenlinien bestehenden Gruppen von seismischen Linien durchführt, indem man an die Gesamtheit der Linien der betreffenden Gruppe ein gleitendes Fenster von vorbestimmter Zeithöhe, vorzugsweise gleich 2/B, anlegt und in diesem Fenster nur die zentrierten Maxima aufnimmt, wobei jedes Maximum einem Wert von $T_o$ und $T_p$ zugeordnet ist, und dann die dem Zeitpaar $(T_o, T_p)$ entsprechende Geschwindigkeit $V_f$ durch die Gleichung

$$V_f = V_S - V_S^3 \cdot \frac{T_o}{2V_1^2 T_p}$$

errechnet, in der $V_s$ die bei der dynamischen Korrekturbehandlung verwendete Geschwindigkeit ist.

8. Verfahren nach einem der Ansprüche 1 bis 7, das die Bestimmung eines verbesserten Summenschnitt gestattet, dadurch gekennzeichnet, daß man eine Anpeilung der Maxima auf jeder der aus den 2n+1 Primärsummenlinien bestehenden Gruppen von seismischen Linien vornimmt, indem man an die Gesamtheit der Linien der betreffenden Gruppe ein gleitendes Fenster mit vorbestimmter Zeithöhe, vorzugsweise gleich 2/B, anlegt, indem man in diesem Fenster nur die zentrierten Maxima aufnimmt, man die auf diese Maxima zentrierten Primärsummenlinienabschnitte mit vorbestimmter Zeithöhe, vorzugsweise gleich der Zeithöhe des für die Anpeilung der Maxima verwendeten Gleitfensters, auswählt und eine zusammengesetzte Summenlinie erzeugt, die dem Mittelpunkt zugeordnet ist, der der Gruppe von 2n+1 behandelten Primärsummenlinien entspricht, indem man die auf diese Weise auf den 2n+1 Primärsummenlinien ausgewählten Abschnitte auf eine gemeinsamen Zeitachse versetzt, indem man die Stellung dieser Abschnitte in der Zeit beibehält.

FIG_1

FIG_2

FIG. 3

FIG. 4

FIG.5

FIG.6

Axe des ITP

FIG_7

FIG. 8

EP 0 734 536 B1

AXE DES VITESSES

FIG.9

EP 0 734 536 B1

## AXE DES VITESSES

FIG_10

FIG.11